# EUROPEAN PATENT SPECIFICATION

(11) **EP 1 254 727 B1**
(45) Date of publication and mention of the grant of the patent: **07.03.2007**
(21) Application number: 01610047.1
(22) Date of filing: 04.05.2001
(51) Int. Cl.: B09B 1/00, B65D 88/16

(54) **Method of storing contaminated materials in a containment cell**
Verfahren zum Aufheben verunreinigter Materialien in einer Behälterzelle
Methode de garder des materiaux crasseux dans une cellule de confinement

(43) Date of publication of application: 06.11.2002
(73) Proprietor: Icopal Plastic Membranes A/S, 2730 Herlev (DK)
(72) Inventor: Taylor, David, Greenhills, East Kilbride (GB); Marcher, Bjorn, 2670 Greve (DK)
(74) Representative: Nielsen, Henrik Sten

(56) References cited:
- DE-A- 3 031 525
- FR-A- 2 722 435
- GB-A- 2 063 212
- US-A- 5 471 065
- STIOMAK/THT: "Materiaalkeuze in de werktuigbouwkunde" 1978 , EDUCABOEK , CULEMBORG XP002181264 ISBN 90 11 38800 3 * page 13 - page 20 *

## Description

The present invention relates to a method of storing contaminated materials or products such as contaminated soil.

Contaminated materials or products, such as contaminated soil, require to be cleaned up to permit land development and to reduce harm or hazard to human beings, animals flora, fauna and reduce discharge potential to water courses. The cleaning up of the contaminated materials or products, in particular contaminated soil, involve in situ treatment or transportation to treatment or cleaning locations or land fill or waste dumps. The known methods of treatment of in particular contaminated soil are lengthy and extremely expensive. Alternative techniques of disposing, rendering harmless, or reducing risk of contaminated materials or products have of course been developed and used firstly in an unauthorised scale and later on in controlled and authorised manner including the authorisation and permission by the authorities such as the governmental or environmental authorities. Examples of prior art depositing techniques are described in WO 96/37664, WO 98/53928 and DE-A-3031525.

An object of the present invention is to provide an improved method of containing, storing or depositing contaminated materials or products, in particular contaminated soil, as compared to the elaborated prior art techniques such as the techniques described in the above WO-publications.

Furthermore it is an object of the present invention to provide another technique which is more safe, cheaper, more simple to use and less time consuming than the prior art depositing techniques and which reduces the requirement for specialist handling or specialist intervention before safe depositing. It is also an object of the invention that it increases the volume and availability of locations and types of locations for depositing such materials thus reducing the pressure on the environment from the large volume single area disposals of previous methods.

It is an advantage of the present invention that the novel technique according to the present invention of storing contaminated materials or products, such as contaminated soil, is easily and readily implemented as the elements or components needed for carrying out the novel technique are readily available at low costs for providing a stable and safe deposition.

It is a further advantage of the present invention that the novel technique according to the present invention makes it possible that the cell also allows temporary storage and containment while further testing is carried out.

An advantage of the present invention relates to the fact that the novel deposition technique allows the deposition of contaminated materials or products, in particular contaminated soil, to be made without to any substantial extent influencing the landscape or the urban area as the deposition of the contaminated materials or products, in particular contaminated soil, may be carried out on location in a safe and reliable manner.

The above objects, advantages and numerous other objects, advantages and features which will be evident from the below detailed description of the present invention are in accordance with a first aspect of the present invention obtained by a method of storing contaminated material such as contaminated soil, comprising:
i) providing an openable containment cell defining a bottom wall, opposite side walls, opposite end walls, and a lid for closing and sealing off said containment cell, said openable containment cell defining an overall length, an overall width and an overall height, and being made from a flexible, bendable and stretchable yet tough plastics foil material allowing parts of said cell to be dimensionally elongated or stretched at least 100%,
ii) providing a hole in the ground having a length, a width and a depth slightly exceeding the length, the width and the height, respectively, of said containment cell,
iii) positioning said openable containment cell in said hole and opening said lid for allowing access to the interior of said containment cell,
iv) filling said contaminated material into the interior of said containment cell so as to fill out a major part such as 40% or more e.g. 40-50%, e.g. 50-70% or 40%-50%, 50%-60%, 60%-70%, 70%-80%, 80%-90% or more than 90% of the interior of said containment cell by said contaminated material
v) sealing off said containment cell by closing said lid on to said side walls and end walls of said containment cell, and
vi) filling out the free space within said hole not occupied by said containment cell by material previously escavated from the ground formation, by sand, gravel, clay or any other none-contaminated filling material.

According to the features of the present invention, it has been realised that a stable and safe deposition of or storing of contaminated materials or products, in particular contaminated soil, may be established by using a containment cell made from a plastics foil material which is stretchable allowing the containment cell to accommodate to the deposition site without being disposed to rupture or destruction. In particular, according to the teaching of the present invention, the containment cell is a fairly small containment cell defining an interior space of more than 1m³ such as 2-20m³ e.g. 3-16m³ e.g. 4-12m³ or defining an inner space in the order of 1-2m³, 2-4m³- 4-16m³, 16-32m³. As will be understood, the containment cell according to the present and preferred embodiment of the method according to the present invention constitutes a containment cell unit in which a few loads from a digging machine such as an excavator is received within the containment cell and permanently or semi-permanently stored in accordance with the teaching of the present invention.

The containment cell may preferably be of a simple geometrical shape allowing that the excavation is easily made or performed by means of a conventional excavator such as a reach truck or a loader tractor. Preferably, the containment cell is of box shaped configuration or alternatively, provided the soil in which the containment cell is to be positioned, is of high content of sand preventing the hole from being produced having steep flanks, the containment cell may have sloping side walls. As will be described above, the containment cell according to the first aspect of the present invention may be used as a single containment cell or alternatively be used as a multitude of containment cells which are positioned one after another in a row of containment cells. For some purposes, the containment cell needs to be temporarily supported by means of a simple structure such as a structure produced from wooden laths.

In a further application of the containment cell, the containment cell may also be used for transportation purposes for allowing the safely contained material contained within the containment cell to be moved from one location to another. It is, however, to be emphasised that the intentional application of the containment cell is for the permanent or temporary storing of the material within the containment cell in a location below the surface of the earth rather than for the transportation of the materials from one location to another.

It is to be contemplated that the containment cell is of a structure allowing the containment cell to be transported from factory to the application site in a folded state or even in a folded and stacked state allowing a multiplicity of containment cells to be shipped or transported together reducing the overall transportation and handling costs as compared to a rigid containment cell structure which needs to be transported in an unfolded and ready-to-use state from the factory.

For allowing the containment cell to be used for an extended period of time for providing a permanent or semi-permanent deposition of contaminated products or materials, such as contaminated soil, the plastics foil material of the containment cell is preferably resistant to the weather and humidity conditions prevailing in the ground formation and also being resistant to acid, alkaline or corrosion activity, microbial growth, and contaminating chemicals like hydrocarbons, chlorinated hydrocarbons, fertilisers.

The containment cell may in accordance with techniques well known in the art be made from a single layer foil, laminated two- or multi-layer foil. Provided a single layer foil is unable to provide the relevant characteristics or mechanical properties, the two- or multi-layer foil structure may alternatively provide in the combination of two or more layers the required properties or mechanical characteristics as is well known in the art. Further the combination of several foil layers allows for the provision of specific characteristics as to permeability of gases or specific chemicals in combination with specific mechanical properties, etc.

For complying with the requirements in terms of mechanical strength, mechanical duration, etc., the plastics foil material of the containment cell preferably exhibit specific properties as to tear strength, puncture resistance, nail tear resistance, etc. In particular the plastics foil material preferably exhibit a specific tear strength of more than 150 N/mm according to ISO 6383/1 and puncture resistance of more than 350 N/mm thickness according to FTMS-101c-2031, and/or exhibit a nail tear resistance of more than 1000 N/mm according to EN 12310. Preferably, the yield strength should be considerably lower than the ultimate tensile strength, preferably around 50% of the tensile strength, to allow the material to deform at use.

The containment cell has to allow for the deformation and elongation of the walls of the containment cell for accommodating to the configuration of the hole and also adapt to the mechanical impact exposed to the containment cell by the contaminated product, materials or the like, in particular contaminated soil which is placed and received within the containment cell. According to a particular feature characteristic of the containment cell to be used in accordance with the method according to the first aspect of the present invention, the plastics foil material of the containment cell exhibit a unidirectional or bidirectional elongation in the order of 100-1000%, such as 100-500%, e.g. 100-400% or 100-200%, 200-400% or 400-800%.

The materials to be used for the containment cell in a single layer foil structure or a laminated two- or multi-layer foil structure may be chosen from a number of well known plastic foil materials such as PE, preferably LDPE or MDPE, LLDPE, VLDPE, alternatively termed plastomers; EVA; EBA; EMA; EAA; PP, preferably isotactic polypropylene homopolymer; random copolymers of propylene and ethylene, alternatively termed raco-PP; copolymers of propylene, ethylene and optionally higher alpha-olefins such as heterophasic block polymers, TPO; POP; Polybutylene (Poly(1-butene)); block copolymers; crosslinked polymers such as EPDM, SBR, EPR, PIB, PEX, PIP, polyisobutylene and TPU; Plasticized PVC ; and blends or mixtures of any of the above or other suitable materials, preferably having a bimodal molecular weight distribution, being block copolymers or combinations of block and copolymers.

It is to be realised that the strength and the elongation property of the containment cell has to be balanced as on the one hand the containment cell should be a strong and stable structure allowing for the long term stable deposition and on the other hand has to provide a sufficient degree of flexibility in terms of allowing the walls of the containment cell to be deformed, bent or elongated. For complying with these requirements, the plastics foil material of the containment cell advantageously has a thickness of 0.5-2 mm, such as 0.8-1.5 mm.

The above object and advantages together with numerous other objects, advantages and features which will be evident from the below detailed description of the present and preferred embodiments of the present invention obtained by the method of storing contaminated material such as contaminated soil according to any of the claims 1-11, the containment cell being openable and defining a bottom wall, opposite side walls, opposite end walls, and a lid for closing and sealing off said containment cell, said openable containment cell being made from a flexible, bendable and stretchable yet tough plastics foil material allowing parts of said cell to be dimensionally elongated or stretched at least 100%, and said containment cell defining an interior space of more than 1m³, such as 2-20m³, e.g. 3-16m³, e.g. 4-12m³ or defining an inner space in the order of 1-2m³, 2-4m³- 4-16m³, 16-32m³.

The containment cell preferably exhibits any of the features discussed above in relation to the discussion of the method according to the present invention.

The present invention is now to be further described with reference to the drawings in which
Fig. 1a is an exploded and perspective view of a first and presently preferred embodiment of a containment cell.
Fig. 1b is a perspective view of the above first and presently preferred embodiment of the containment cell in assembled and closed state,
Fig. 2 is a perspective view of a second embodiment of the containment cell in assembled and opened state,
Fig. 3 is a vertical sectional and schematic view of the second embodiment of the containment cell also shown in Fig. 2 in its intentional use,
Fig. 4a is an exploded and schematic view similar to the view of Fig. 1 a of a third embodiment of the containment cell.
Fig. 4b is a perspective and schematic view similar to the view of Fig. 1b of the third embodiment of the containment cell also shown in Fig. 4a in assembled and closed state, and
Fig. 5 is a perspective and schematic view illustrating the use of the second embodiment of the containment cell also shown in Figs. 2 and 3 for the storing of contaminated materials or products such as contaminated soil.

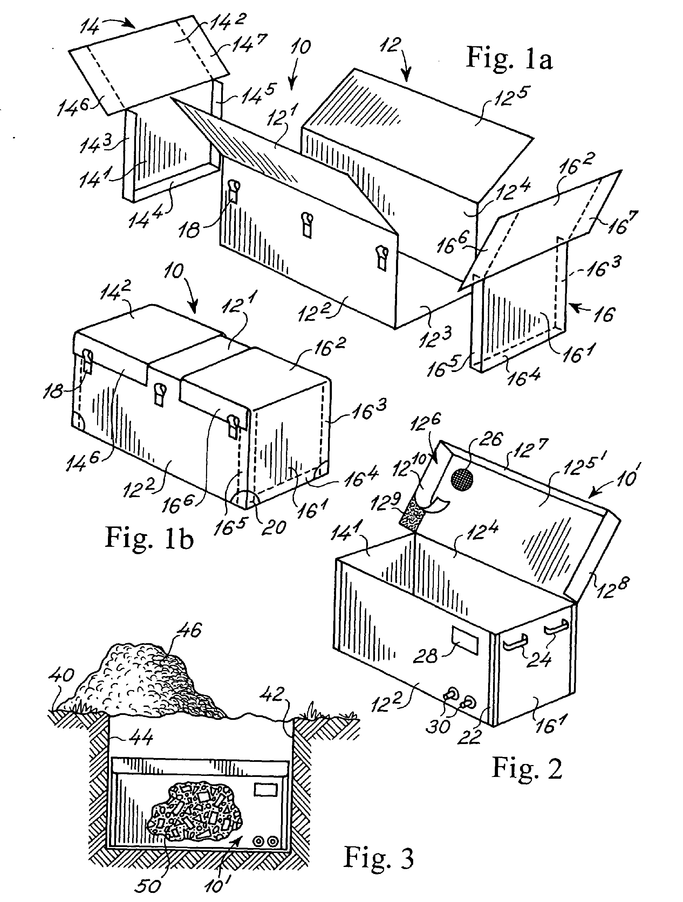

In Fig. 1a, a first and preferred embodiment of a containment cell is shown in exploded, unassembled and opened state. The first embodiment of the containment cell shown in Fig. 1a is in its entirety designated the reference numeral 10 and is basically composed of three foil components, a central bottom and side walls defining foil component 12 and two end walls defining foil components or parts 14 and 16.

The foil component 12 constitutes a basically rectangular foil part bent into five flaps 12¹, 12², 12³, 12⁴ and 12⁵. The centre flap 12³ defines the bottom wall of the assembled containment cell and the adjacent second and fourth flaps 12² and 12⁴ , respectively, constitute the side walls of the assembled containment cell. The first and the fifth flap 12¹ and 12⁵, respectively, constitute top closure flaps and each have a size substantially corresponding to the size of the bottom wall flap 12³ for providing a stiff and complete closure of the assembled containment cell. In the two opposite side wall flaps 12² and 12⁴, three support hooks are provided in each of the side wall defining flaps, one of which of the support hooks is designated the reference numeral 18.

The end wall defining foil components or parts 14 and 16 each comprise a rectangular central foil part 14¹ and 16¹, respectively defining the end walls of the assembled containment cell 10 as illustrated in Fig. 1b. From each of the foil parts 14¹ and 16¹, a major closure flap or lid defining flap 14² and 16², respectively, extend upwardly. From the end wall defining parts 14¹ and 16¹, further three flanges 14³, 14⁴ and 14⁵, and 16³, 16⁴ and 16⁵, respectively, protrude inwardly for engaging with and fixation to the side wall defining flaps and the bottom wall defining flap 12², 12⁴ and 12³, respectively, of the central component 12. From the closure flap or lid defining flaps 14² and 16², two additional flange parts 14⁶, 14⁷ and 16⁶, 16⁷, respectively, extend for closing off the top part of the assembled and closed containment cell as is illustrated in Fig. 1b.

In Fig. 1B, the assembled and closed containment cell 10 is shown in greater details. As is illustrated in Fig. 1b, the two end wall defining parts 14 and 16 are fixated to the central part 14 as the flanges 14³, 14⁴ and 14⁵ of the part 14 and similarly the flanges 16³, 16⁴ and 16⁵ are received behind the side wall defining flaps 12², 12⁴ and the bottom wall defining flap 12³ of the central part 12 and fixated to the central part 12 by means of an adhesive material or alternatively and preferably by heat welding or extrusion welding, or in a hot melt seal or similar fixation. The top opening of the containment cell is closed as the two closure flaps 12¹ and 12⁵ of the central part 12 are bent into positions parallel with the bottom wall defining flap 12³ of the central part as the flap 12¹ is positioned on top of the flap 12⁵. The closure or lid flaps 14² and 16² of the end wall defining parts 14 and 16, respectively, are further turned down for closing and arresting the flaps 12¹ and 12⁵ in the above position as the flaps 14⁶, 14⁷ and 16⁶, 16⁷ of the closure or lid parts 12² and 16², respectively, extend parallel with the side walls 12² and 12⁴ of the containment cell 10 for water tight closure of the cell. As is illustrated in Fig. 1b, the flaps 14⁶ and 16⁶ and similarly the flaps 14⁷ and 16⁷ at the opposite side of the assembled and closed containment cell 10 are arrested in the turned-in position as the flaps are positioned behind the support hooks 18. The support hooks 18 are primarily intended for the handling of the empty cell prior to filling with material. The containment cell 10 shown in Fig. 1b is further provided with reinforcing components fixated to the side, bottom and end walls of the containment cell for reinforcing the corners of the containment cell 10. In Fig. 1b one of these components is designated the reference numeral 20. The reinforcing components 20 are preferably adhered to the side, end and bottom walls of the containment cell 10.

In Fig. 2 a second embodiment of the containment cell is shown, designated the reference numeral 10' in its entirety. In the drawings, components or elements identical to the previous described components or elements are designated the same reference numerals as used in Figs. 1a and 1b. Components or elements differing from components or elements described above, however, serving the same purpose as previously described components or elements are designated the same reference numerals, however added a marking for identifying the difference from the previously described component of element.

The second embodiment 10' is like the above described first embodiment 10 a box-shaped containment cell having a rectangular bottom wall not shown in Fig. 2, two opposite side walls 12² and 12⁴, and two end walls 14¹ and 16¹. The side walls and the end walls are joined together by means of reinforcing and assembling components 22 as the flanges 14³, 14⁴, 14⁵ and 16³, 16⁴ and 16⁵ of the parts 14 and 16, respectively, shown in Fig. 1a are omitted.

The lid of the second embodiment 10' further differs from the above described lid of the first embodiment 10 in that the second embodiment is provided with a single lid part 12⁵' which is provided with circumferential flange parts 12⁶, 12⁷ and 12⁸. The circumferential flange parts 12⁶, 12⁷ and 12⁸ are internally provided with an adhesive coating covered by a release paper. In Fig. 2, a part of the release paper covering the adhesive of the flange 12⁶ is shown as a part of the adhesive covering of the flange part 12⁶ is exposed and designated the reference numeral 12⁹. The release paper part removed from the exposed adhesive coating 12⁹ is designated the reference numeral 12¹⁰.

The second embodiment 10' of the containment cell shown in Fig. 2 further differs from the above described preferred embodiment 10 in that the support hooks 18 are omitted whereas in Fig. 2, end wall handles 24 are provided. Further in the lid 12⁵' a vent opening 26 is provided and in the front wall 12² a window is also is also provided which window allows a person filling the containment cell to inspect the interior of the containment cell after the lid 12⁵' has been closed on to the containment cell and fixated by means of the adhesive coatings of the flanges 12⁶, 12⁷ and 12⁸. The containment cell 10' shown in Fig. 2 further includes two tubular drain outlets positioned below the window 28 and one of which is designated with the reference numeral 30. The vent 26 may optionally be connected to a pipe for leading gases away in a controlled manner.

In Fig. 3, the intentional application or use of the containment cell 10' shown in Fig. 2 is illustrated. In an earth formation 40, a hole is produced preferably by means of a digging machine defining two opposite substantially vertical and parallel walls 22 and 44. The earth removed from the ground formation is piled in a pile of soil or earth 46. In the hole defined in the earth formation 40 by the hole defining walls 42 and 44, the containment cell 10' is positioned having in its interior received a substance 50 which may constitute contaminated soil which may not legitimately be expelled as domestic waste or is not to be expelled as domestic waste for other reasons. In the containment cell, the material 50 may be contained and permanently or semi-permanently be stored for an extended or short period of time as the containment cell 10' is produced from a foil material which is resistant to the constituents of the material or substance 50 and also resistant to the conditions prevailing in the earth or soil 40 such as the humidity and temperature prevailing in the earth formation 40. After the storing of the containment cell 10 having the material or substance received within the containment cell and after the permanent sealing off of the interior of the containment cell by means of the adhesive coatings of the flaps 12⁶, 12⁷ and 12⁸ as described above, or alternatively by using an adhesive sealant, the containment cell 10' is covered by the soil 46 which is thrown or otherwise positioned on top of the containment cell 10'. In Fig. 3, the containment cell 10' is shown in an undistorted or undeformed state, however in many applications, the walls including the bottom wall of the containment cell and also the cover or lid of the containment cell is bent and stretched and therefore, the foil material of the containment cell is preferably a plastics material which may be elongated without rupture up to 100% or even more. Examples of relevant plastics material are listed elsewhere.

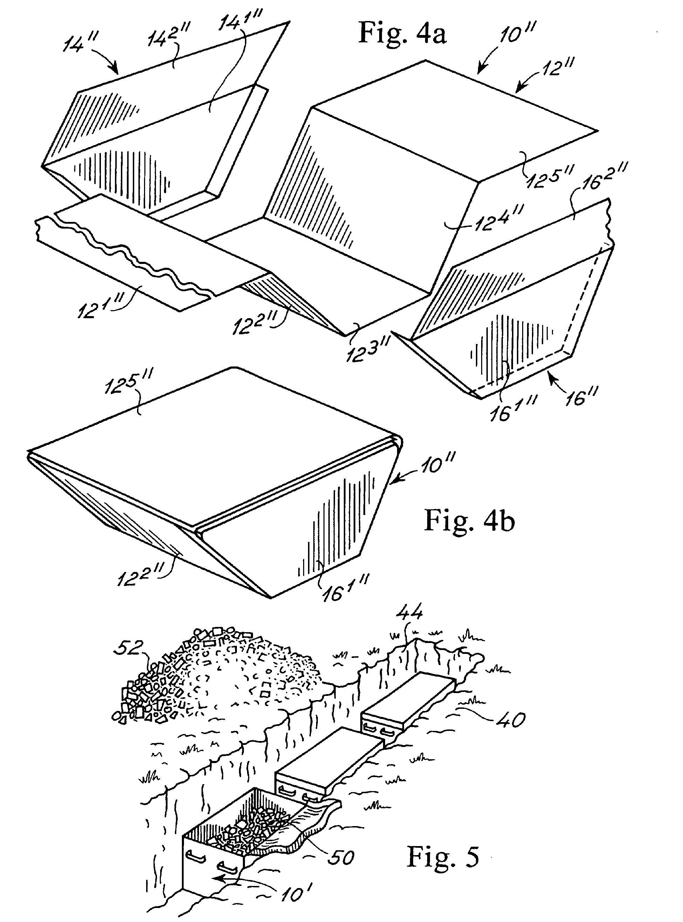

For some applications, the hole which is produced in the soil or earth cannot maintain the rectangular configuration illustrated in Fig. 3, e.g. in situations with a high content of sand in which the 'slope stability' of the excavations may be poor. For the permanent or semi-permanent storage of contaminated material such as contaminated soil in areas having earth or sand formation with high content of sand, a differently configurated containment cell 10" shown in Fig. 4a is relevant or applicable. Like the above described preferred embodiment 10 shown in Fig. 1a, the third embodiment 10" includes a central part 12" and two end parts 14" and 16". The end part 12" like the above described first embodiment includes five flaps 12¹", 12²", 12³", 12⁴" and 12⁵" similar to the above described flaps 12¹, 12², 12³, 12⁴ and 12⁵, respectively. Whereas the flaps 12² and 12⁴ shown in Fig. 1a are intended to be positioned in an orientation perpendicular to the end wall defining flap 12³, the side wall defining flaps 12²" and 12⁴" of the part 12" of the third embodiment 10" shown in Fig. 4a are intended to be positioned in obtuse angles relative to the bottom wall defining flap 12³". Similarly the end wall defining parts 14" and 16" define central end wall parts 14¹" and 16¹", respectively, having a trapezoidal configuration. In Fig. 4b, the third embodiment 10" of the containment cell is shown in an assembled and closed state having the flaps 12¹" and 12⁵" positioned on top of the lid or closure flaps 14²" and 16²" of the end wall defining parts or components 14" and 16", respectively.

In Fig. 5, the technique of storing contaminated soil or other waste material in accordance with the teaching of the present invention is illustrated in greater details. In Fig. 5, the second embodiment 10' of the containment cell also shown in Figs. 2 and 3 is used in a multiplicity including three containment cells, two containment cells being readily closed and the front containment cell 10' being opened for receiving the waste material or contaminated soil 50 which is piled next to the hole in the ground or soil formation 40. Each of the containment cells 10' are preferably of a size allowing the containment cell to receive approximately 2-32 m³ material and therefore, the containment cells are preferably used in accordance with a storage technique according to which the hole is first produced whereupon the empty containment cell be positioned in the hole in the ground whereupon the contaminated soil or other waste material be introduced into the opened containment cell which is then closed off before the hole in the ground in which the closed off and sealed containment cell is positioned be covered by soil, sand or other relevant cover off material. The support hooks or handles are primarily used to ease positioning of the cell prior to filling.

### Example 1

In a prototype embodiment of the containment cell identical to the first embodiment 10 shown in Fig. 1, the containment cell measured 4m x 2m x 2m. In total measuring 16 m³. The three components 12, 14 and 16 of the containment cell were made from non-reinforced LDPE foil material of a thickness of 1,5mm of the type Blackline 1000 in 1.0 mm thickness supplied by the applicant company Monarflex A/S and used for geo-membrane purposes.

### Example 2

In an alternative embodiment shown in Fig. 4a, the side walls 12²" and 12⁴" were positioned sloping 45° relative to the horizontal bottom wall 12³". The containment cell 10" was made from 1,5 mm thick LDPE geo-membrane material of the type Blackline 1000 supplied by the applicant company Monarflex A/S. The length of the trapezoidal cell was 400cm, the width was 600cm and the height was 200cm. In total, the trapezoidal containment cell 10" had a volume of approximately 32m³.

Although the present invention has been described above with reference to presently preferred embodiments, the invention is by no means limited to the above described embodiments, rather is the invention to be construed in the light of the appending claims as modifications obvious to a person having ordinary skill in the art reading the present specification are also to be considered part of the invention as defined in the appending claims.

## Claims

1. A method of storing contaminated material such as contaminated soil, comprising:
i) providing an openable containment cell (10,10',10'') defining a bottom wall (12³,12^{3''}), opposite side walls (12²,12⁴,12^{2''},12^{4''}), opposite end walls (14¹,16¹,14^{1''},16^{1''}), and a lid (12¹,12⁵,12^{1''},12^{5''}) for closing and sealing off said containment cell (10,10',10"), said openable containment cell (10,10',10'') defining an overall length, an overall width and an overall height, and being made from a flexible, bendable and stretchable yet tough plastics foil material allowing parts of said cell (10,10',10") to be dimensionally elongated or stretched at least 100%,
ii) providing a hole in the ground having a length, a width and a depth slightly exceeding the length, the width and the height, respectively, of said containment cell (10,10',10"),
iii) positioning said openable containment cell (10,10',10") in said hole and opening said lid (12¹,12⁵,12^{1"},12^{5"}) for allowing access to the interior of said containment cell (10,10',10''),
iv) filling said contaminated material (50) into the interior of said containment cell (10,10',10'') so as to fill out a major part such as 40% or more e.g. 40-50%, e.g. 50-70% or 40%-50%, 50%-60%, 60%-70%, 70%-80%, 80%-90% or more than 90% of the interior of said containment cell (10,10',10'') by said contaminated material (50)
v) sealing off said containment cell (10,10',10'') by closing said lid (12¹,12⁵,12^{1''},12^{5''}) on to said side walls (12²,12⁴,12^{2''},12^{4''}) and end walls (14¹,16¹,14^{1''},16^{1''}) of said containment cell (10,10',10"), and
vi) filling out the free space within said hole not occupied by said containment cell (10,10',10'') by material previously excavated from the ground formation, by sand or any other none-contaminated filling material.

2. The method according to claim 1, said containment cell (10,10',10'') defining an interior space of, more than 1 m³, such as 2-20m³ e.g. 3-16m³ e.g. 4-12m³ or defining an inner space in the order of 1-2m³, 2-4m³- 4-16m³, 16-32m³.

3. The method according to any of the claims 1-2, said plastics foil material of said containment cell (10,10',10") being resistant to the weather and humidity conditions prevailing in the ground formation and also being resistant to acid, alkaline or corrosion activity.

4. The method according any of the claims 1-3, said plastics foil material of said containment cell (10,10',10'') being a single-layer foil, a laminated two- or multi-layer foil.

5. The method according to any of the claims 1-4, said plastics foil material exhibiting a specific tear strength in the order of more than 150 N/mm according to ISO 6383/1.

6. The method according to any of the claims 1-5, said plastics foil material of said containment cell (10,10',10") exhibiting a puncture resistance of more than 350 N/mm thickness according to FTMS-1 01 c-2031.

7. The method according to any of the claims 1-6, said plastics foil material of said containment cell (10,10',10") exhibiting a nail tear resistance of more than 1000 n/mm, according to EN 12310.

8. The method according to any of the claims 1-7, said plastics foil material of said containment cell (10,10',10") exhibiting a unidirectional or bidirectional elongation in the order of 100-1000%, such as 100-500%, e.g. 100-400% or 100-200%, 200-400% or 400-800%.

9. The method according to any of the claims 1-8, said plastics foil material of said containment cell (10,10',10'') being PE, preferably LDPE or MDPE, LLDPE. VLDPE, alternatively termed plastomers; EVA; EBA; EMA; EAA; PP, preferably isotactic polypropylene homopolymer; random copolymers of propylene and ethylene, alternatively termed raco-PP; copolymers of propylene, ethylene and optionally higher alpha-olefins such as heterophasic block polymers, TPO; POP; Polybutylene (Paly(1-butene)); block copolymers; crosslinked polymers such as EPDM, SBR, EPR, PIB, PPX, PIP, polyisobutylene and TPU; Plasticized PVC ; and blends or mixtures of any of the above, preferably having a bimodal molecular weight distribution, being block copolymers or combinations of block and copolymers.

10. The method according to any of the claims 1-9, said plastics foil material of said containment cell (10,10',10'') having a thickness of 0.5-2mm, such as 0.8-1.5mm.

## Patentansprüche

1. Verfahren zum Aufheben verunreinigten Materials wie zum Beispiel verunreinigter Erde, umfassend:
i) Bereitstellen einer aufmachbaren Behälterzelle (10,10',10"), die eine Bodenwand (12³,12^{3''}), gegenüberliegende Seitenwände (12²,12⁴,12^{2''},12^{4''}), gegenüberliegende Endwände (14¹,16¹,14^{1''},16^{1''}) und einen Deckel (12¹,12⁵,12^{1''},12^{5''}) zum Schließen und Versiegeln der aufmachbaren Behälterzelle (10,10',10") definiert, wobei die aufmachbare Behälterzelle (10,10',10") eine Gesamtlänge, eine Gesamtbreite und eine Gesamthöhe definiert und aus einem flexiblen, biegsamen und streckbaren dennoch festen Kunststoffolienmaterial gemacht ist, das es ermöglicht, dass Teile der Zelle (10,10',10") um mindestens 100% dimensional gedehnt oder gestreckt werden,
ii) Bereitstellen eines Lochs im Boden mit einer Länge, einer Breite und einer Tiefe, welche die Länge, die Breite beziehungsweise die Höhe der Behälterzelle (10,10',10") leicht überschreitet,
iii) Positionieren der aufmachbaren Behälterzelle (10,10',10") im Loch und Öffnen des Deckels (12¹,12⁵,12^{1''},12^{5''}), um Zugang zum Inneren der Behälterzelle (10,10',10") zu ermöglichen,
iv) Einfüllen des verunreinigten Materials (50) in das Innere der Behälterzelle (10,10',10''), um einen größeren Teil, wie zum Beispiel 40% oder mehr, zum Beispiel 40-50%, zum Beispiel 50-70% oder 40%-50%, 50%-60%, 60%-70%, 70%-80%, 80%-90% oder mehr als 90% des Inneren der Behälterzelle (10,10',10") mit dem verunreinigten Material (50) auszufüllen,
v) Versiegeln der Behälterzelle (10,10',10") durch Schließen des Deckels (12¹,12⁵,12^{1''},12^{5''}) auf die Seitenwände (12²,12⁴,12^{2''},12^{4''}) und Endwände (14¹,16¹,14^{1''},16^{1''}) der Behälterzelle (10,10',10''), und
vi) Ausfüllen des von der Behälterzelle nicht in Anspruch genommenen freien Raums innerhalb des Lochs (10,10',10'') mit vorher aus dem Boden ausgehobenem Material, mit Sand oder jedem anderen nicht verunreinigten Füllmaterial.

2. Verfahren nach Anspruch 1, wobei die Behälterzelle (10,10',10'') einen Innenraum von mehr als 1m³, wie zum Beispiel 2-20m³, zum Beispiel 3-16m³, zum Beispiel 4-12m³ definiert oder einen Innenraum in der Größenordnung von 1-2m³, 2-4m³- 4-16m³, 16-32m³ definiert.

3. Verfahren nach einem der Ansprüche 1-2, wobei das Kunststoffolienmaterial der Behälterzelle (10,10',10'') gegenüber den im Boden vorherrshenden Witterungs- und Feuchteverhältnissen beständig ist und ebenfalls gegenüber Säure-, Alkali- oder Korrosionsaktivität beständig ist.

4. Verfahren nach einem der Ansprüche 1-3, wobei das Kunstetoffolienmaterial der Behälterzelle (10,10',10'') eine Einschichtfolie, eine laminierte Zwei- oder Mehrschichtfolie ist.

5. Verfahren nach einem der Ansprüche 1-4, wobei das Kunststoffolienmaterial eine spezifische Reißfestigkeit in der Größenordnung von mehr als 150 N/mm nach ISO 6383/1 aufweist.

6. Verfahren nach einem der Ansprüche 1-5, wobei das Kunststoffolienmaterial der Behälterzelle (10,10',10") eine Sticheinreißfestigkeit von mehr als 350 N/mm Dicke nach FTMS-101c-2031 aufweist.

7. Verfahren nach einem der Ansprüche 1-6, wobei das Kunststoffolienmaterial der Behälterzelle (10,10',10") eine Nagelreißfestigkeit von mehr als 1000 n/mm nach EN 12310 aufweist.

8. Verfahren nach einem der Ansprüche 1-7, wobei das Kunststoffolienmaterial der Behälterzelle (10,10',10") eine unidirektionale oder bidirektionale Dehnung in der Größenordnung von 100-1000%, wie zum Beispiel 100-500%, zum Beispiel 100-400% oder 100-200%, 200-400% oder 400-800% aufweist.

9. Verfahren nach einem der Ansprüche 1-8, wobei das Kunststoffolienmaterial der Behälterzelle (10,10',10") PE ist, bevorzugt LDPE oder MDPE, LLDPE, VLDPE, alternativ Plastomere genannt; EVA; EBA; EMA; EAA; PP, bevorzugt isotaktisches Polypropylen Homopolymer; Random Copolymere aus Propylen und Ethylen, alternativ PP Raco genannt: Copolymere aus Propylen, Ethylen und optional höhere Alpha-Olefine, wie zum Beispiel heterophasische Blockpolymere, TPO; POP; Polybutylen (Paly(1-buten)); Blockcopolymere; quervernetzte Polymere, wie zum Beispiel EPDM, SBR, EPR, PIB, PEX, PIP, Polyisobutylen und TPU; plastifiziertes PVC; und beliebige Abmischungen oder Gemische von den oben genannten Materialien, bevorzugt mit einer bimodalen molekularen Gewichtsverteilung, wobei sie Blockcopolymere oder Kombinationen von Block und Copolymeren sind.

10. Verfahren nach einem der Ansprüche 1-9, wobei das Kunststoffolienmaterial der Behälterzelle (10,10',10'') eine Dicke von 0,5-2mm, wie zum Beispiel 0,8-1,5mm, aufweist.

## Revendications

1. Méthode de garder des matériaux crasseux, comme par exemple de la terre contaminée, comprenant:
i) la réalisation d'une cellule de confinement ouvrante (10, 10', 10'') définissant une paroi inférieure (12³, 12^{3''}), des parois latérales opposées (12², 12⁴, 12^{2''}, 12^{4''}), des parois d'extrémité (14¹, 16¹, 14^{1''}, 16^{1''}), et un couvercle (12¹, 12⁵, 12^{1''}, 12^{5''}), pour la fermeture et le scellement hermétique de ladite cellule de confinement (10, 10', 10"), ladite cellule de confinement (10, 10', 10") définissant une longueur totale, une largeur hors tout et une hauteur hors tout, et étant faite d'un matiériau de film plastique flexible, pliable et extensible et pourtant résistant qui permet des parties de ladite cellule (10,10',10'') d'être dimensionnellement ralongées ou étendues à au moins 100%,
ii) la réalisation d'un trou dans la terre ayant une longueur, une largeur et une profondeur étant légèrement supérieure à la longeur, à la largeur et à la hauteur, respectivement, de ladite cellule de confinement (10, 10', 10''),
iii) plaçant ladite cellule de confinement ouvrante (10,10', 10") dans ledit trou et ouvrant ledit couvercle (12¹, 12⁵, 12^{1"}, 12^{5"}) pour permettre l'accès à l'intérieur de ladite cellule de confinement (10, 10', 10"),
iv) remplissage de la matière contaminée (50) à l'intérieur de ladite cellule (10, 10', 10") de manière à remplir une partie considérable comme par exemple 40% ou plus, par exemple de 40 à 50%, par exemple de 50 à 70% ou de 40 à 50%, 50% à 60%, 60 à 70%, 70% à 80%, 80% à 90% ou plus de 90% de l'intérieur de ladite cellule de confinement (10, 10', 10") avec cette matière contaminée (50),
v) fermeture et scellement hermétique de ladite cellule de confinement (10, 10', 10") en fermant ledit couvercle (12¹, 12⁵, 12^{1"}, 12^{5"}) sur lesdites parois latérales (12², 12⁴, 12^{2"}, 12^{4"}) et lesdites parois d'extrémité (14¹, 16¹, 14^{1"}, 16^{1"}) de ladite cellule de confinement (10, 10', 10"), et
vi) remplissage de l'espace libre à l'intérieur dudit trou n'étant pas occupé par ladite cellule de confinement (10, 10', 10") par de la matière ayant auparavant été extraite du sous-sol, par du sable ou une autre matière de remplissage non-contaminée.

2. La méthode selon la revendication 1, ladite cellule de confinement (10, 10', 10") définissant un espace intérieur supérieur à 1 m³, comme par exemple de 2 à 20 m³, par exemple de 3-16 m³, par exemple de 4 à 12 m³ ou définissant un espace intérieur de l'ordre de 1 à 2 m³, 2 à 4 m³, 4 à 16 m³, 16 à 32 m³.

3. La méthode selon l'une quelconque des revendications 1 à 2, ladite matière de film plastique de ladite cellule de confinement (10, 10', 10") étant résistante au conditions du temps et de l'humidité qui prédominent dans le sous-sol et étant également résistante à l'activité acide, l'activité alcaline ou de l'activité de la corrosion.

4. La méthode selon l'une quelconque des revendications 1 à 3, ladite matière de film plastique de ladite cellule de confinement (10, 10', 10") étant une feuille à couche unique ou une feuille laminée à double couche ou en plusieurs couches.

5. La méthode selon l'une quelconque des revendications 1 à 4, ladite matière de film plastique présentant une résistance à la déchirure spécifique de l'ordre de plus de 150 N/mm selon le ISO 6383/1.

6. La méthode selon l'une quelconque des revendications 1 à 4, ladite matière de film plastique de ladite cellule de confinement (10, 10', 10") présentant une increvabilité de plus de 350 N/mm d'épaisseur selon le FTMS-101 c-2031.

7. La méthode selon l'une quelconque des revendications 1 à 6, ladite matière de film plastique de ladite cellule de confinement (10,10', 10") présentant une résistance tenant à fer et à clou de plus de 1000 N/mm selon le EN 12310.

8. La méthode selon l'une quelconque des revendications 1 à 6, ladite matière de film plastique de ladite cellule de confinement (10, 10', 10") présentant une extension unidirectionnelle ou bidirectionnelle de l'ordre de 100 à 1000%, comme par exemple de 100 à 500%, par exemple de 100 à 400% ou de 100 à 200%, de 200 à 400% ou de 400 à 800%.

9. La méthode selon l'une quelconque des revendications 1 à 6, ladite matière de film plastique de ladite cellule de confinement (10, 10', 10") étant du PE, préférablement du LDPE ou MDPE, LLDPE, VLDPE, alternativement désignés des plastomères; EVA; EBA; EMA; EAA; PP, préférablement de l'homopolymère polypropylène isotactique; des copolymères au hasard de propylène et d'ethylène, alternativement désignés raco-PP; des copolymères de propylène, d'ethylène et éventuellement des alpha-oléfines supérieures comme par exemple des copolymères à blocs déphasés, TPO; POP; du polybutylène (Poly(1-butène)); des copolymères à blocs; des polymères à liaisons transversales comme par exemple du EPDM, SBR, EPR, PIB, PEX, PIP, du polyisobutylène et du TPU; du polychlorure de vinyle plastifié; et des combinaisons ou des mélanges de n'importe lesquels parmi les sus-mentionnés, préférablement ayant une distribution de poids moléculaire bimodale, étant des copolymères à blocs ou des combinaisons de bloc et de copolymères.

10. La méthode selon l'une quelconque des revendications 1 à 6, ladite matière de film plastique de ladite cellule de confinement (10, 10', 10") ayant une épaisseur de 0.5 à 2 mm, comme par exemple de 0.8 à 1.5 mm.
